# EUROPÄISCHE PATENTANMELDUNG

(11) **EP 1 369 195 A1**
(43) Veröffentlichungstag der Anmeldung: **10.12.2003**
(21) Anmeldenummer: 03405383.5
(22) Anmeldetag: 27.05.2003
(51) Int. Cl.: B23B 51/04

(54) **Kernborhkrone mit geometrisch definierten Schneidelementen**

(30) Priorität: 06.06.2002 DE 11022507
(71) Anmelder: HILTI Aktiengesellschaft, 9494 Schaan (LI)
(72) Erfinder: Moseley, Steven, 6800 Feldkirch-Tisis (AT)
(74) Vertreter: Wildi, Roland

(57) **Zusammenfassung**

Eine Kernbohrkrone mit wenigstens zwei geometrisch definierten, flachen Schneidelementen (2a, 2b), wobei zumindest ein erstes Schneidelement (2a) mit einem Axialspanwinkel (α₁) und einem Radialspanwinkel (β₁) und ein zweites Schneidelement (2b) mit einem Axialspanwinkel (α₂) und einem Radialspanwinkel (β₂) vorhanden ist, wobei verschiedene Axialspanwinkel (α₁ ≠ α₂) und/oder verschiedene Radialspanwinkel (β₁ ≠ β₂) vorhanden sind oder zumindest ein Schneidelement (2a) mit einem von Null verschiedenen Radialspanwinkel (β₁ ≠ 0) vorhanden ist.

## Beschreibung

Die Erfindung bezeichnet eine, vorzugsweise für spröde Materialien wie Beton und Mauerwerk ausgebildete, Kernbohrkrone mit geometrisch definierten, flachen Schneidelementen mit stirnseitigen Schneidkanten.

Für um eine Drehachse drehangetriebene Kernbohrkronen mit geometrisch definierten, flachen Schneidelementen, deren Flächennormale entlang der Bewegungstrajektorie des Schneidelementes mit Schneidkanten verläuft, wird im weiteren ein Axialspanwinkel und ein Radialspanwinkel von Null definiert. Die Orientierung der Axialspanwinkel ist bei einer Kippung des Schneidelementes mit einer Versetzung der stirnseitigen Schneidkanten in Richtung der Bewegungstrajektorie positiv definiert. Die Orientierung der Radialspanwinkel ist bei einer Kippung des Schneidelementes mit einer Versetzung der radial äusseren Schneidkanten in Richtung der Bewegungstrajektorie ebenfalls positiv definiert.

Beim Kernbohren z. B. von Beton und Mauerwerk sind zudem auch zähe Einlagerungen wie Armierungseisen (Ribar) zu durchtrennen.

Nach der DE3407427 weist eine Kernbohrkrone für spröde Materialien geometrisch definierte, flache PCD (polycrystalline diamond) -Schneidelemente mit ausschliesslich bezüglich der Drehachse negativem Axialspanwinkel auf. Nach der DE4242465 weist eine Kernbohrkrone untereinander geometrisch unterschiedliche geometrisch definierte, flache PCD-Schneidelemente mit stirnseitigen Schneidkanten und ausschliesslich negativen Axialspanwinkel auf. Für eingebettete zähe Materialien ist ein ausschliesslich negativer Axialspanwinkel nicht optimiert.

Zudem weist nach der DE4341054 eine Kernbohrkrone nach innen und aussen schräg geneigte geometrisch definierte, stiftförmige Schneidelemente auf. Stiftförmige Schneidelemente weisen keine Fläche mit Schneidkanten und somit keinen Spanwinkel obiger Definition auf.

Die Aufgabe der Erfindung besteht in der Erweiterung des optimierten Einsatzbereiches einer Kernbohrkrone auf eingebettete zähe Materialien.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist eine Kernbohrkrone wenigstens zwei geometrisch definierte, flache Schneidelemente auf, wobei zumindest ein erstes Schneidelement und ein zweites Schneidelement verschiedene Axialspanwinkel und/oder verschiedene Radialspanwinkel aufweisen oder zumindest ein Schneidelement mit einem von Null verschiedenen Radialspanwinkel vorhanden ist.

Durch den zumindest bei einigen Schneidelementen nicht vorhandenen, bezüglich spröder Materialien optimierten, ausschliesslich negativem Axialspanwinkel wird durch diese Schneidelemente mit positivem Axialspanwinkel und/oder einem von Null verschiedenen Radialspanwinkel der Einsatzbereich der Kernbohrkrone auf in spröden Materialien eingebettete zähe Materialien erweitert, da deren Schneidkanten bei zähen Materialien ein verbessertes Schneidverhalten aufweisen und die Belastung der Schneidkanten verringert wird.

Vorteilhaft weist zumindest ein Schneidelement sowohl einen jeweils von Null verschiedenen Axialspanwinkel als auch einen Radialspanwinkel auf, wodurch ein glatter Schnitt durch eingebettete zähe Materialien möglich ist.

Vorteilhaft weist zumindest ein Schneidelement einen positiven Axialspanwinkel als auch einen positiven Radialspanwinkel auf, wodurch nur geringere Schneidkräfte im zähen Material erforderlich sind, allerdings auch der Verschleiss steigt.

Alternativ vorteilhaft weist zumindest ein Schneidelement einen negativen Axialspanwinkel als auch einen negativen Radialspanwinkel auf, wodurch die Festigkeit der Schneidelemente steigt, allerdings hohe Schneidkräfte im zähen Material erforderlich sind.

Alternativ vorteilhaft weist zumindest ein Schneidelement einen positiven Axialspanwinkel als auch einen negativen Radialspanwinkel auf, wodurch bezüglich höherer Festigkeit der Schneidelemente und geringerer erforderlicher Schneidkräfte im zähen Material ein praktisch vernünftiger Kompromiss möglich ist.

Vorteilhaft weisen zumindest einige verschiedene Schneidelemente verschiedene Axialspanwinkel im Axialspanwinkelbereich zwischen -20° bis +20°, weiter vorteilhaft zwischen -10° bis +5° auf, wodurch ein praktisch vernünftiger Kompromiss möglich ist.

Vorteilhaft weisen zumindest einige verschiedene Schneidelemente verschiedene Radialspanwinkel im Radialspanwinkelbereich zwischen -20° bis +20°, weiter vorteilhaft zwischen -10° bis +10° auf, wodurch ein praktisch vernünftiger Kompromiss möglich ist.

Vorteilhaft sind die verschiedenen Schneidelemente in die Axialspanwinkel [-5°, 0°, +5°], sowie in die Radialspanwinkel [-5°, +5°] oder [0°, +5°] gestuft, wodurch ein praktisch vernünftiger Kompromiss möglich ist.

Vorteilhaft sind verschiedene Schneidelemente mit verschiedenen Axialspanwinkeln und/oder Radialspanwinkeln umfänglich asymmetrisch verteilt angeordnet, wodurch Schwingungen vermieden und ein runder Schnitt erzielt wird.

Vorteilhaft sind die Schneidelemente als PCD- Schneidelemente ausgebildet, welche sehr verschleissfest sind.

Die Erfindung wird bezüglich eines vorteilhaften Ausführungsbeispiels näher erläutert mit:
- Fig. 1: als Kernbohrkrone in Perspektivdarstellung;
- Fig. 2a, 2b: eine Variante in schematischen Schnittansicht und Draufsicht;
- Fig. 3a, 3b: eine weitere Variante in schematischen Schnittansicht und Draufsicht; und
- Fig. 4a, 4b: eine weitere Variante in schematischen Schnittansicht und Draufsicht.

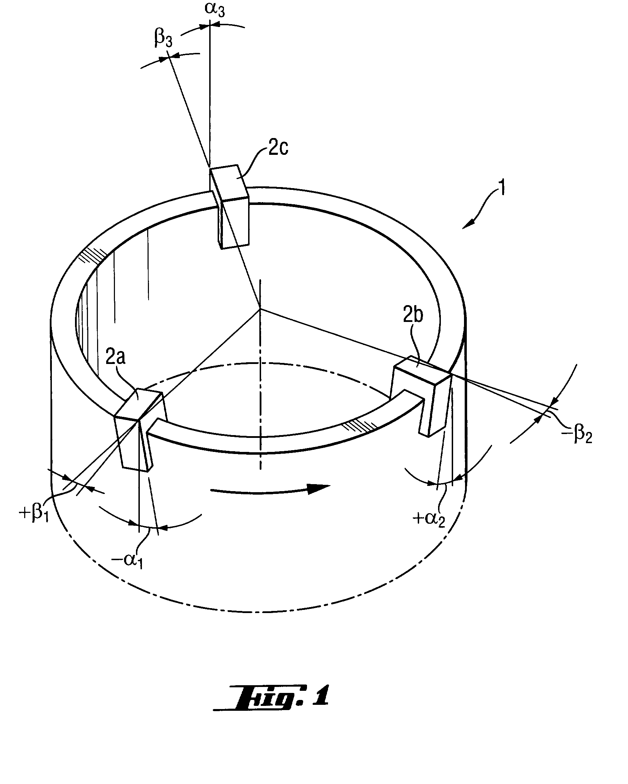

Nach Fig. 1 weist eine Kernbohrkrone 1 mit drei geometrisch definierten, flachen PCD-Schneidelementen ein erstes Schneidelement 2a mit einem bezüglich eines zweiten Schneidelements 2b verschiedenen Axialspanwinkel α_{1,2} und Radialspanwinkel β_{1,2} auf. Dabei weist das Schneidelement 2a sowohl einen von Null verschiedenen Axialspanwinkel α₁ als auch einen von Null verschiedenen Radialspanwinkel β₁ auf. Ein drittes Schneidelement 2c weist einen Axialspanwinkel α₃ sowie einen Radialspanwinkel β₃ von beispielsweise 0 Grad auf. Die umfänglich asymmetrisch verteilt angeordneten, drei verschiedenen Schneidelemente 2a, 2b, 2c weisen Axialspanwinkel im Axialspanwinkelbereich -10° <= α <= +5°, gestuft in [-5°, 0°, +5°] und Radialspanwinkel im Radialspanwinkelbereich -10° <= β <= +10°, gestuft in [-5°, 0°, +5°] auf.

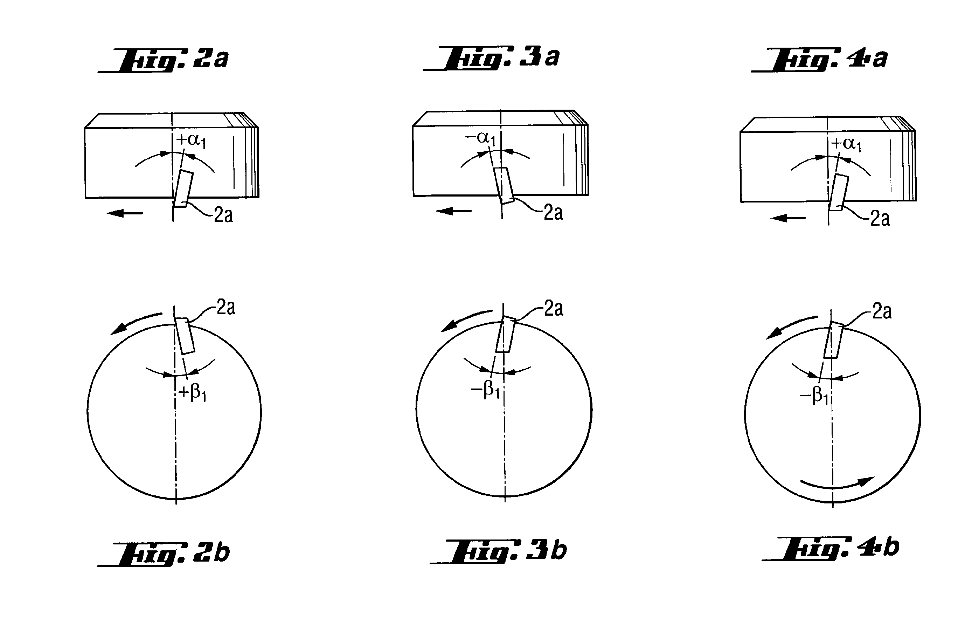

Nach den Fig. 2a, 2b, 3a, 3b, 4a und 4b weisen die Varianten von Kernbohrkronen entweder:
a) ein Schneidelement 2a mit einem positiven Axialspanwinkel α₁ als auch einem positiven Radialspanwinkel β₁ auf (Fig. 2a, 2b).
b) ein Schneidelement 2a mit einem negativen Axialspanwinkel α₁ als auch einen negativen radialen Radialspanwinkel β₁ auf (Fig. 3a, 3b).
c) ein Schneidelement 2a mit einem positiven Axialspanwinkel α₁ als auch einen negativen Radialspanwinkel β₁ auf (Fig. 4a, 4b).

## Patentansprüche

1. Kernbohrkrone mit wenigstens zwei geometrisch definierten, flachen Schneidelementen (2a, 2b), **dadurch gekennzeichnet, dass** zumindest ein erstes Schneidelement (2a) mit einem Axialspanwinkel (α₁) und einem Radialspanwinkel (β₁) und ein zweites Schneidelement (2b) mit einem Axialspanwinkel (α₂) und einem Radialspanwinkel (β₂) vorhanden ist, wobei verschiedene Axialspanwinkel (α₁ ≠ α₂) und/oder verschiedene Radialspanwinkel (β₁ ≠ β₂) vorhanden sind.

2. Kernbohrkrone mit zumindest einem geometrisch definierten, flachen Schneidelement (2a), **dadurch gekennzeichnet, dass** zumindest ein Schneidelement (2a) mit einem von Null verschiedenen Radialspanwinkel (β₁≠ 0) vorhanden ist.

3. Kernbohrkrone nach Anspruch 1 oder 2, **dadurch gekennzeichnet, dass** zumindest ein Schneidelement (2a) mit einem von Null verschiedenen Axialspanwinkel (α₁ ≠ 0) und einem von Null verschiedenen Radialspanwinkel (β₁ ≠ 0) vorhanden ist.

4. Kernbohrkrone nach einem der vorherigen Ansprüche, **dadurch gekennzeichnet, dass** zumindest ein Schneidelement (2a) einen positiven Axialspanwinkel (α₁), d.h. bei einer Kippung des Schneidelementes (2a) mit einer Versetzung der stirnseitigen Schneidkante in Richtung der Bewegungstrajektorie orientiert, als auch einen positiven Radialspanwinkel (β₁), d.h. bei einer Kippung des Schneidelementes (2a) mit einer Versetzung der radial äusseren Schneidkante in Richtung der Bewegungstrajektorie orientiert, aufweist.

5. Kernbohrkrone nach einem der Ansprüche 1 bis 3, **dadurch gekennzeichnet, dass** zumindest ein Schneidelement (2a) einen negativen Axialspanwinkel (α₁) als auch einen negativen Radialspanwinkel (β₁) aufweist.

6. Kernbohrkrone nach einem der Ansprüche 1 bis 3, **dadurch gekennzeichnet, dass** zumindest ein Schneidelement (2a) einen positiven Axialspanwinkel (α₁) als auch einen negativen Radialspanwinkel (β₁) aufweist.

7. Kernbohrkrone nach einem der vorherigen Ansprüche, **dadurch gekennzeichnet, dass** zumindest einige verschiedene Schneidelemente (2a, 2b, 2c) verschiedene Axialspanwinkel (α_{1,2,3}) im Axialspanwinkelbereich zwischen -20° bis +20° , optional zwischen -10° bis +5° und/oder Radialspanwinkel (β_{1,2,3}) im Radialspanwinkelbereich zwischen -20° bis +20° , optional zwischen -10° bis +10° aufweisen und optional die Axialspanwinkel (α_{1,2,3}) in [-5°, 0°, +5°] sowie die Radialspanwinkel (β_{1,2,3}) in [-5°, +5°] oder [0°, ⁺5°] gestuft sind.

8. Kernbohrkrone nach einem der vorherigen Ansprüche, **dadurch gekennzeichnet, dass** verschiedene Schneidelemente (2a, 2b, 2c) umfänglich asymmetrisch verteilt angeordnet sind.

9. Kernbohrkrone nach einem der vorherigen Ansprüche, **dadurch gekennzeichnet, dass** die Schneidelemente (2a, 2b, 2c) als PCD- Schneidelemente ausgebildet sind.
